(19) Europäisches Patentamt / European Patent Office / Office européen des brevets

(11) **EP 1 877 964 B1**

(12) **EUROPÄISCHE PATENTSCHRIFT**

(45) Veröffentlichungstag und Bekanntmachung des Hinweises auf die Patenterteilung:
**07.01.2009  Patentblatt 2009/02**

(21) Anmeldenummer: 06742739.3

(22) Anmeldetag: **28.04.2006**

(51) Int Cl.:
**G06K 19/077** (2006.01)

(86) Internationale Anmeldenummer:
**PCT/EP2006/003989**

(87) Internationale Veröffentlichungsnummer:
**WO 2006/117151 (09.11.2006 Gazette 2006/45)**

(54) **TRAGBARER DATENTRÄGER UND VERFAHREN ZUM BETREIBEN EINES TRAGBAREN DATENTRÄGERS**

PORTABLE DATA CARRIER AND METHOD FOR THE OPERATION OF A PORTABLE DATA CARRIER

SUPPORT DE DONNEES PORTABLE ET SON MODE DE FONCTIONNEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.04.2005  DE 102005020101**

(43) Veröffentlichungstag der Anmeldung:
**16.01.2008  Patentblatt 2008/03**

(73) Patentinhaber: **Giesecke & Devrient GmbH
81677 München (DE)**

(72) Erfinder: **SCHRÖDER, Sönke
81541 München (DE)**

(74) Vertreter: **Klunker . Schmitt-Nilson . Hirsch
Winzererstrasse 106
80797 München (DE)**

(56) Entgegenhaltungen:
| | |
|---|---|
| **EP-A- 1 056 040** | **EP-A- 1 387 313** |
| **WO-A-02/27650** | **DE-A1- 4 205 556** |
| **DE-A1- 19 817 566** | **US-A- 5 376 778** |
| **US-A1- 2001 043 141** | **US-A1- 2003 132 301** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen tragbaren Datenträger und ein Verfahren zum Betreiben eines tragbaren Datenträgers.

Es ist bekannt, in einem tragbaren Datenträger, beispielsweise in einer Chipkarte, eine kontaktlose Kommunikation zwischen dem tragbaren Datenträger und beispielsweise einem entsprechenden Lesegerät abhängig von dem Zustand eines mechanischen Schalters entweder zu unterbinden oder zu zulassen. Der mechanische Schalter unterbricht zu diesem Zweck eine galvanische Verbindung oder stellt eine solche her. Derartige mechanische Schalter sind jedoch vergleichsweise schwer herzustellen und unterliegen zudem einer Abnutzung. Derartige mechanische Schalter sind bekannt aus DE 19817566 A1 oder US 2001/0043141 A1 Einen FET-Schalter verwendet dagegen EP 1056040 A1.

Als alternativer Ansatz ist es bekannt, einen Betriebsmodus einer Chipkarte abhängig von einem erkannten Zustand zu wählen. So wird beispielsweise eine kontaktlose Kommunikation durch einen internen Steuerungsmechanismus unterbunden, wenn die Chipkarte über die Kontaktflächen des Chipmoduls mit einer externen Spannung versorgt wird.

In US 2003/0132301 A1 werden sowohl druckempfindliche, mechanische Taster als auch berührungslos arbeitende Schalter verwendet, um die Verbindung zwischen Spule und Chip entsprechend dem Schaltzustand herzustellen oder zu unterbrechen.

Der Erfindung liegt die Aufgabe zugrunde, einen tragbaren Datenträger und ein Verfahren zum Betrieb eines tragbaren Datenträgers mit einem einfachen aber zuverlässigen Mechanismus für die Freigabe einer kontaktlosen Kommunikation und/ oder Energieübertragung bereit zu stellen.

Diese Aufgabe wird durch einen tragbaren Datenträger mit der Merkmalskombination des Anspruchs 1 und ein Verfahren mit der Merkmalskombination des Anspruchs 8 gelöst. Die Ansprüche sind gegen DE 198 17 566 abgegrenzt.

Der erfindungsgemäße tragbare Datenträge weist eine elektronische Schaltung zur Speicherung und/ oder Verarbeitung von Daten und einen Schwingkreis zur kontaktlosen Kommunikation und/oder Energieübertragung auf. Die Besonderheit des erfindungsgemäßen Datenträgers besteht darin, dass eine von außen beeinflussbare Stelleinrichtung zur Änderung der Resonanzfrequenz des Schwingkreises zwischen einem ersten Frequenzbereich und einem zweiten Frequenzbereich vorgesehen ist.

Wenn für die kontaktlose Kommunikation mit dem tragbaren Datenträger und für die kontaktlose Energieübertragung zum tragbaren Datenträger eine fest vorgegebene Frequenz vorgesehen wird, ermöglicht die erfindungsgemäße Ausbildung des tragbaren Datenträgers eine Steuerung der kontaktlosen Kommunikation und Energieübertragung durch den Benutzer, da eine kontaktlose Kommunikation und Energieübertragung mit einer nennenswerten Reichweite nur in der Nähe der Resonanzfrequenz des Schwingkreises erfolgt. Der Benutzer kann entscheiden, wann er eine kontaktlose Kommunikation bzw. Energieübertragung zulässt und wann nicht. Dies hat den Vorteil eines Zugewinns an Sicherheit für den Benutzer des tragbaren Datenträgers, da er eine unerwünschte externe Einwirkung auf den tragbaren Datenträger unterbinden kann und entscheiden kann, wer welche Daten an den tragbaren Datenträger übermitteln bzw. vom tragbaren Datenträger empfangen kann.

Der erfindungsgemäße tragbare Datenträger ist vorzugsweise so ausgebildet, dass mit der Stelleinrichtung die Kapazität des Schwingkreises änderbar ist. Eine derartige Stelleinrichtung ist einfach zu realisieren und kommt ohne bewegliche Teile aus. Besonders kompakt ist der Aufbau, wenn die Stelleinrichtung so ausgebildet ist, dass sie wenigstens zeitweise ein Bestandteil des Schwingkreises ist. Die Änderung der Resonanzfrequenz erfolgt in diesem Fall dadurch, dass die Stelleinrichtung wahlweise in den Schwingkreis eingebunden oder von diesem separiert wird.

In einem bevorzugten Ausführungsbeispiel weist die Stelleinrichtung ein Betätigungselement auf, bei dessen Berührung die Resonanzfrequenz des Schwingkreises geändert wird. Dabei kann beispielsweise vorgesehen sein, dass die kontaktlose Kommunikation und/oder Energieübertragung nur bei der geänderten Resonanzfrequenz möglich ist, da diese nahe bei der Übertragungsfrequenz des Kommunikationspartners liegt. Der Benutzer kann in diesem Fall eine kontaktlose Kommunikation oder Energieübertragung durch Berühren des Betätigungselements zulassen. Ohne eine solche Berührung ist der tragbare Datenträger gesperrt, da die dann vorliegende Resonanzfrequenz zu weit von der Übertragungsfrequenz des Kommunikationspartners entfernt ist. D. h. der tragbare Datenträger wird so ausgelegt, dass der Schwingkreis ohne eine Berührung des Betätigungselements durch den Benutzer stark gegenüber der vorgesehenen Übertragungsfrequenz verstimmt ist.

Um eine gute Zugänglichkeit zu ermöglichen, ist das Betätigungselement vorzugsweise in der Oberfläche des tragbaren Datenträgers angeordnet. Insbesondere ist das Betätigungselement ein Bestandteil wenigstens eines Kondensators oder mit wenigstens einem Kondensator elektrisch leitend verbunden. Dabei ist das Betätigungselement beispielsweise so ausgebildet, dass es zwei elektrisch leitende Flächen aufweist. Die zwei elektrisch leitenden Flächen können auf der gleichen Seite des tragbaren Datenträgers nebeneinander angeordnet sein und somit bequem mittels eines Fingers miteinander verbunden werden. Ebenso ist es auch möglich, die zwei elektrisch leitenden Flächen auf gegenüberliegenden Seiten des tragbaren Datenträgers anzuordnen. In diesem Fall können die elektrisch leitenden Flächen beispielsweise dadurch miteinander verbunden werden, dass der tragbare Datenträger zwischen Daumen und Zeigefinger gehalten wird. An der Kartenoberfläche können diese Flächen z. B. auch durch Hologramme realisiert werden.

Der erfindungsgemäße tragbare Datenträger ist vorzugsweise als eine Chipkarte ausgebildet.

Die Erfindung bezieht sich weiterhin auf ein Verfahren zum Betreiben eines tragbaren Datenträgers mit einem Schwingkreis zur kontaktlosen Kommunikation und/ oder Energieübertragung. Das erfindungsgemäße Verfahren zeichnet sich dadurch aus, dass der Schwingkreis von außen so beeinflusst wird, dass er eine Resonanzfrequenz innerhalb eines ersten Frequenzbereichs aufweist, wenn die kontaktlose Kommunikation und/ oder Energieübertragung zugelassen werden soll und eine Resonanzfrequenz innerhalb eines zweiten Frequenzbereichs aufweist, wenn die kontaktlose Kommunikation und/ oder Energieübertragung unterbunden werden soll.

Bei einer Variante des erfindungsgemäßen Verfahrens bleibt eine durch die Beeinflussung des Schwingkreises von außen verursachte Änderung der Resonanzfrequenz so lange erhalten, wie die Beeinflussung des Schwingkreises anhält. Bei dieser Variante ist das Verhalten des tragbaren Datenträgers für den Benutzer sehr transparent, so dass kaum eine Gefahr der Fehlbedienung besteht. Dabei weist der Schwingkreis ohne äußere Beeinflussung vorzugsweise eine Resonanzfrequenz innerhalb des zweiten Frequenzbereichs auf und ist somit für eine kontaktlose Kommunikation und/oder Energieübertragung gesperrt. Für eine Zulassung der kontaktlosen Kommunikation und/oder Energieübertragung ist ein aktives Handeln des Benutzers erforderlich.

Bei einer weiteren Variante des erfindungsgemäßen Verfahrens bleibt eine durch die Beeinflussung des Schwingkreises von außen verursachte Änderung der Resonanzfrequenz bis zu einer weiteren Beeinflussung des Schwingkreises von außen erhalten. Dies hat den Vorteil, dass die Beeinflussung nicht über den gesamten Zeitraum der kontaktlosen Kommunikation und/ oder Energieübertragung aufrecht erhalten werden muss.

Durch die Beeinflussung von außen wird vorzugsweise die Kapazität des Schwingkreises geändert. Dabei erfolgt die Beeinflussung von außen insbesondere durch eine Hautberührung eines Benutzers. Dadurch ist eine einfache Handhabung gewährleistet. Die kontaktlose Kommunikation und/ oder Energieübertragung kann bei einer Frequenz innerhalb des ersten Frequenzbereichs durchgeführt werden. Bei einer Weiterbildung des erfindungsgemäßen Verfahrens wird bei einer Frequenz innerhalb des zweiten Frequenzbereichs keine kontaktlose Kommunikation, jedoch eine kontaktlose Energieübertragung durchgeführt, die für einen Betrieb des tragbaren Datenträgers ausreicht. Dadurch ist auch im zweiten Frequenzbereich ein Betrieb des tragbaren Datenträgers gewährleistet und es wird dennoch eine unerwünschte Kommunikation mit dem tragbaren Datenträger verhindert.

Die Beeinflussung des Schwingkreises von außen kann nicht nur der Änderung der Resonanzfrequenz dienen, sondern es kann damit auch eine Überführung einer elektronischen Schaltung des tragbaren Datenträgers in einen definierten Zustand veranlasst werden.

Die Erfindung wird nachstehend anhand der in der Zeichnung dargestellten Ausführungsbeispiele erläutert, bei denen der tragbare Datenträger jeweils als eine Chipkarte ausgebildet ist. Die Erfindung ist allerdings nicht auf Chipkarten beschränkt, sondern bezieht sich gleichermaßen auch auf andere tragbare Datenträger. Dabei ist als ein tragbarer Datenträger im Sinn der Erfindung ein Rechnersystem anzusehen, bei dem die Ressourcen, d.h. Speicherressourcen und/ oder Rechenkapazität (Rechenleistung) begrenzt sind, z.B. eine Chipkarte (Smart Card, Mikroprozessor-Chipkarte) oder ein Token oder ein Chipmodul zum Einbau in eine Chipkarte oder in ein Token. Der tragbare Datenträger hat einen Körper, in dem eine CPU (ein Mikroprozessor) angeordnet ist, und der jede beliebige standardisierte oder nicht standardisierte Gestalt haben kann, beispielsweise die Gestalt einer flachen Chipkarte ohne Norm oder nach einer Norm wie z.B. ISO 7810 (z.B. ID-1, ID-00, ID-000) oder die eines volumigen Tokens. Der tragbare Datenträger kann weiter eine oder mehrere beliebige Schnittstellen für kontaktlose und/oder kontaktbehaftete Kommunikation mit einem Lesegerät oder Datenverarbeitungssystem (z.B. Personal Computer, Workstation, Server) haben.

Es zeigen:

Fig. 1    ein Ausführungsbeispiel einer erfindungsgemäß ausgebildeten Chipkarte in einer schematischen Schnittdarstellung und

Fig. 2    die in Fig. 1 dargestellte Chipkarte in einer schematischen Aufsicht.

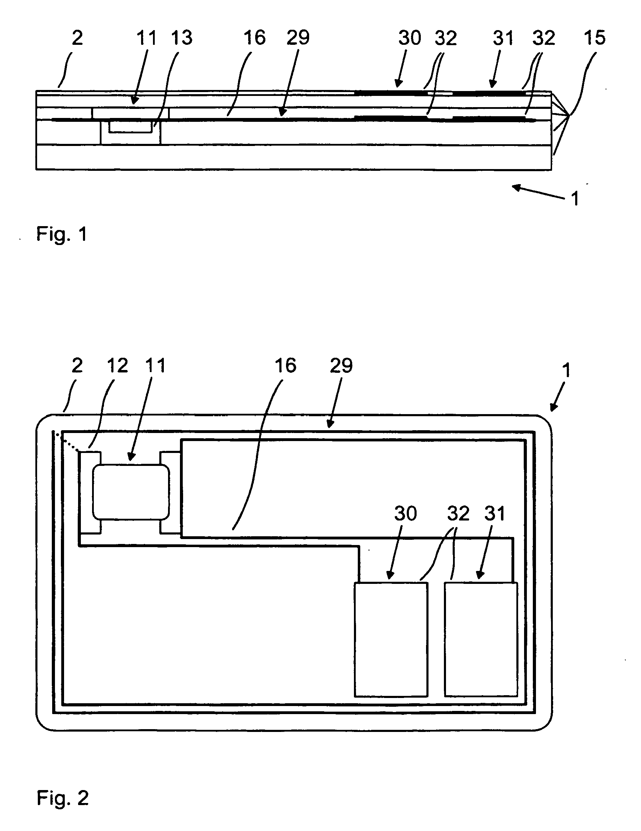

Fig. 1 zeigt ein Ausführungsbeispiel einer erfindungsgemäß ausgebildeten Chipkarte 1 in einer schematischen Schnittdarstellung. Die Darstellung ist nicht streng auf eine Schnittebene begrenzt, sondern zeigt auch gegeneinander versetzt angeordnete Komponenten der Chipkarte 1. Es wurde daher auf die Verwendung von Schraffuren verzichtet. Aus Gründen der Anschaulichkeit ist die Darstellung stark unmaßstäblich ausgeführt. Eine zugehörige Aufsicht auf die Chipkarte 1, bei der auch im Inneren der Chipkarte 1 angeordnete Komponenten gezeigt sind, ist in Fig. 2 dargestellt.

Die Chipkarte 1 weist einen Kartenkörper 2 auf, in den ein Chipmodul 11 eingebettet ist und elektrisch leitend mit elektrischen Verbindungselementen 12 verbunden ist. Das Chipmodul 11 enthält einen Mikrocontroller 13, in dem beispielsweise eine Anwendungssoftware der Chipkarte 1 implementiert ist. Der Kartenkörper 2 ist bzgl. seiner Abmessungen bevorzugt gemäß der Norm ISO/IEC 7810 ausgebildet und beim dargestellten Ausführungsbeispiel aus fünf Kunststofffolien 15 hergestellt. Als Material für die Kunststofffolien 15 eignet sich beispielsweise PVC. Zur Herstellung der Chipkarte 1 werden die Kunststofffolien 15 im Bogenformat übereinander gestapelt und vorzugsweise durch Heißlamination miteinander verbunden. Ebenso können auch andere Verfahren zur Herstellung des Kartenkörpers 2 herangezogen werden. Zuvor werden auf wenigstens eine der Kunststofffolien 15 die elektrischen Verbindungselemente 12 und daran angeschlossene Leiterbahnen 16 aufgebracht, beispielsweise durch Bedrucken mit Silberleitpaste. Bei der Heißlamination erweichen die Kunststofffolien 15 und verschmelzen miteinander. Optional kann dabei ein Laminierkleber eingesetzt werden, der die Kunststofffolien 15 miteinander verbindet. Der Laminierkleber kann beispielsweise in Form dünner Folien eingesetzt werden, die jeweils zwischen benachbarten Kunststofffolien 15 angeordnet werden. Ebenso ist es möglich, die Kunststofffolien 15 mit dem Laminierkleber zu beschichten oder koextrudierte Kunststofffolien 15 zu verwenden. Nach der Heißlamination werden die Chipkarten 1 durch Ausstanzen vereinzelt.

Durch die Leiterbahnen 16 wird eine Antennenspule 29 ausgebildet, die über die elektrischen Verbindungselemente 12 mit dem Chipmodul 11 und somit auch mit dem Mikrocontroller 13 verbunden ist. Weiterhin sind ein erster Kondensator 30 und ein zweiter Kondensator 31 vorgesehen. Die Kondensatoren 30 und 31 werden jeweils durch zwei in einem Abstand parallel zueinander angeordnete kapazitive Flächen 32 ausgebildet. Bei beiden Kondensatoren 30 und 31 ist je eine kapazitive Fläche 32 bündig zur Oberfläche des Kartenkörpers 2 angeordnet und damit von außen zugänglich. Die jeweils andere kapazitive Fläche 32 ist im Inneren des Kartenkörpers 2 angeordnet und über eine Leiterbahn 16 an eines der elektrischen Verbindungselemente 12 angeschlossen.

Werden die beiden äußeren kapazitiven Flächen 32 elektrisch leitend miteinander verbunden, so wird eine Serienschaltung aus den beiden Kondensatoren 30 und 31 ausgebildet, die der Antennenspule 29 parallel geschaltet ist. Die Serienschaltung weist eine Gesamtkapazität Cg auf, die mit den Kapazitäten $C_1$ des ersten Kondensators 30 und $C_2$ des zweiten Kondensators 31 folgendermaßen zusammenhängt:

$$1/C_g = 1/C_1 + 1/C_2.$$

Die Gesamtkapazität Cg beeinflusst die Resonanzfrequenz $f_{res}$ des zusammen mit der Antennenspule 29 und der Kapazität des Chipmoduls 11 ausgebildeten Schwingkreises. Für die Resonanzfrequenz $f_{res}$ gilt:

$$f_{res} = 1/2\pi\sqrt{LC}.$$

Dabei stellt L die Induktivität und C die Kapazität des Schwingkreises dar. Die durch ein Verbinden der äußeren kapazitiven Flächen 32 erzeugte Serienschaltung der beiden Kondensatoren 30 und 31 erhöht die Kapazität C des Schwingkreises und reduziert somit die Resonanzfrequenz $f_{res}$. Dieser Effekt kann beispielsweise dadurch genutzt werden, dass der Schwingkreis ohne die beiden Kondensatoren 30 und 31 gegenüber der Sendefrequenz eines Lesegeräts verstimmt ist. Zum Beispiel beträgt die Sendefrequenz des Lesegeräts 13,56 MHz und die Resonanzfrequenz $f_{res}$ des Schwingkreises mehr als 40 MHz. Unter diesen Umständen ist eine Energie- und Datenübertragung zwischen dem Lesegerät und der Chipkarte 1 kaum möglich. Durch Verbinden der äußeren kapazitiven Flächen 32 wird die Resonanzfrequenz $f_{res}$ des Schwingkreises reduziert und dadurch der Sendefrequenz des Lesegeräts angenähert, so dass eine Datenübertragung möglich ist. Auf diese Weise kann zwischen einem Zustand, in dem eine Energie- und Datenübertragung möglich ist und einen Zustand, in dem beides nicht möglich ist, umgeschaltet werden. Somit hat der Inhaber der Chipkarte 1 die Möglichkeit, zu entscheiden, ob er eine Energie- und Datenübertragung zulässt oder nicht. Dadurch können unerwünschter Zugriffe auf die Chipkarte 1 verhindert werden, da eine Kommunikation mit der Chipkarte 1 nur dann möglich ist, wenn der Inhaber der Chipkarte 1 eine Verbindung zwischen den äußeren kapazitiven Flächen 32 herstellt. In einer Abwandlung ist vorgesehen, auch dann, wenn eine Datenübertragung nicht möglich ist, noch eine ausreichende Energiemenge zu übertragen, um den Mikrocontroller 13 betreiben zu können.

Damit auf Hilfsmittel zum Verbinden der äußeren kapazitiven Flächen 32 verzichtet werden kann ist in einer Weiterbildung vorgesehen, diese Verbindung durch Berühren mit einem Finger herzustellen. In diesem Fall wird allerdings kein direkter galvanischer Kontakt ausgebildet, sondern es wird der menschliche Körper als eine weitere Kapazität in die Serienschaltung der Kondensatoren 30 und 31 einbezogen. Damit gilt für die Gesamtkapazität Cg:

$$1/C_g = 1/C_1 + 1/C_2 + 1/C_h.$$

Dabei stellt $C_h$ die bei einer Berührung der Haut zu berücksichtigende Kapazität dar. Typischerweise beträgt $C_h$ ca. 5 nF und ist erheblich größer als die Kapazitäten $C_1$ und $C_2$ der beiden Kondensatoren 30 und 31, da Letztere durch die relativ kleinen kapazitiven Flächen 32 gebildet werden. Im Hinblick auf die Serienschaltung hat dies zur Folge, dass die Gesamtkapazität Cg nur sehr geringfügig von der Kapazität $C_h$ der Haut abhängt. Gleichwohl wird durch die Hautkapazität $C_h$ die Serienschaltung erst ausgebildet. Dies bedeutet, dass durch eine Berührung der äußeren kapazitiven Flächen 32 beispielsweise mit einem Finger jeweils eine annähernd konstante Gesamtkapazität Cg der Antennenspule 29 parallel geschaltet oder von dieser getrennt werden kann.

Die äußeren kapazitiven Flächen 32 können auch auf Vorder- und Rückseite des Kartenkörpers 2 angeordnet werden. Bei dieser Variante kann eine Verbindung zwischen den äußeren kapazitiven Flächen 32 beispielsweise durch Ergreifen der Chipkarte 1 mit Daumen und Zeigefinger ausgebildet werden. Ebenso besteht die Möglichkeit, sämtliche kapazitiven Flächen 32 im Inneren des Kartenkörpers 2 anzuordnen. Bei dieser Variante sind für die Hautberührung sonstige metallische Bereiche auf der Oberfläche des Kartenkörpers 2, beispielsweise ohnehin vorhandene Hologramme oder Aufdrucke mit leitfähiger Druckfarbe, vorgesehen, die mit einigen der kapazitiven Flächen 32 verbunden sind. Die kapazitiven Flächen 32 können auch vollständig entfallen und die Kondensatoren 30 und 31 stattdessen als handelsüblicher Bauteile, beispielsweise in SMD-Technik, ausgeführt werden.

Bei einer Abwandlung wird auf die Kondensatoren 30 und 31 völlig verzichtet und durch Berührung dafür vorgesehener Flächen beispielsweise mit einem Finger die Hautkapazität $C_h$ der Antennenspule 29 parallel geschaltet.

Dabei wirken sich Schwankungen des Wertes der Hautkapazität $C_h$ allerdings unmittelbar auf die Resonanzfrequenz $f_{res}$ aus.

Die durch die Kapazitätsänderung bewirkte Änderung der Resonanzfrequenz $f_{res}$ bleibt jeweils so lange erhalten, wie die geänderte Kapazität vorliegt. Dies bedeutet, dass die Chipkarte 1 für die Dauer der Berührung der dafür vorgesehenen Flächen eine geänderte Resonanzfrequenz $f_{res}$ aufweist und wieder ihre ursprüngliche Resonanzfrequenz $f_{res}$ annimmt, sobald die Berührung aufgehoben wird. Alternativ dazu besteht auch die Möglichkeit, die Kapazitätsänderung beispielsweise mittels einer geeigneten Elektronik so weiter zu verarbeiten, dass sie ein auslösendes Ereignis für einen Schaltvorgang darstellt und der dadurch erreichte Schaltzustand solange erhalten bleibt, bis das auslösende Ereignis ein zweites Mal auftritt.

Mit allen beschriebenen Varianten lässt sich die Resonanzfrequenz $f_{res}$ des Schwingkreises von außen beeinflussen und dadurch bestimmen, ob eine kontaktlose Kommunikation mit der Chipkarte 1 möglich ist und ob der Chipkarte 1 auf kontaktlosen Weg Energie zugeführt werden kann. Die dabei jeweils herbeigeführte Kapazitätsänderung kann aber auch auf andere Weise als über die Resonanzfrequenz $f_{res}$ des Schwingkreises ausgewertet werden und/ oder für andere Zwecke als zur Steuerung der Daten-und/ oder Energieübertragung eingesetzt werden. Insbesondere eröffnet die bereits angedeutete Einbeziehung einer Elektronik vielfältige Möglichkeiten. Dabei wird bevorzugt auf den Mikrocontroller 13 zurückgegriffen, der die benötigten Elektronik-Funktionen zur Verfügung stellen kann. Ein sonstiger Einsatzzweck kann beispielsweise darin bestehen, dass durch die Kapazitätsänderung ein Zurücksetzen des Mikrocontrollers 13 in einen definierten Zustand ausgelöst wird. Eine derartige Maßnahme ist erforderlich, wenn der Mikrocontroller 13 beispielsweise durch elektrostatische Aufladungseffekte in einen undefinierten Zustand gebracht wurde. Dies kann insbesondere bei der Herstellung der Chipkarte 1 geschehen. Kommt es tatsächlich zu einem undefinierten Zustand des ersten Mikrocontrollers 13, kann die Chipkarte 1 nur dann ihrer bestimmungsgemäßen Verwendung zugeführt werden, wenn es gelingt, den ersten Mikrocontroller 13 in einen definierten Zustand zurückzusetzen. Hierzu ist es lediglich erforderlich die dafür vorgesehenen Flächen der Chipkarte 1 zu berühren.

Die Chipkarte 1 ist somit mit einem kapazitiven Taster ausgestattet, der auf Berührung reagiert und keine beweglichen Komponenten aufweist. Mit diesem kapazitiven Taster ist eine direkte und unmittelbare Einwirkung auf den Schwingkreis möglich, die insbesondere eine Änderung der Resonanzfrequenz $f_{res}$ zur Folge haben kann. Ebenso kann der kapazitive Taster auch sonstige Schaltvorgänge auslösen.

## Patentansprüche

1. Tragbarer Datenträger mit einer elektronischen Schaltung (13) zur Speicherung und/ oder Verarbeitung von Daten und einem Schwingkreis (29, 30, 31) zur kontaktlosen Kommunikation und/oder Energieübertragung, **dadurch gekennzeichnet, dass** eine von außen beeinflussbare Stelleinrichtung (30, 31) zur Änderung der Resonanzfrequenz ($f_{res}$) des Schwingkreises (29, 30, 31) zwischen einem ersten Frequenzbereich und einem zweiten Frequenzbereich vorgesehen ist und
dass die Stelleinrichtung (30,31) ein Betätigungselement (32) aufweist, bei dessen Berührung die Resonanzfrequenz ($f_{res}$) des Schwingkreises (29, 30, 31) geändert wird;
wobei das Betätigungselement (32) in der Oberfläche des tragbaren Datenträgers (1) angeordnet ist; und
das Betätigungselement (32) Bestandteil wenigstens eines Kondensators ist.

2. Tragbarer Datenträger nach Anspruch 1, **dadurch gekennzeichnet, dass** mit der Stelleinrichtung (30, 31) die Kapazität des Schwingkreises (29, 30, 31) änderbar ist.

3. Tragbarer Datenträger nach einem der vorhergehenden Ansprüche, **dadurch gekennzeichnet, dass** die Stelleinrichtung (30, 31) wenigstens zeitweise ein Bestandteil des Schwingkreises (29, 30, 31) ist.

4. Tragbarer Datenträger nach Anspruch 1, **dadurch**

**gekennzeichnet, daß** das Betätigungselement (32) zwei elektrisch leitende Flächen aufweist.

5. Tragbarer Datenträger nach Anspruch 4, **dadurch gekennzeichnet, daß** die zwei elektrisch leitenden Flächen auf der gleichen Seite des tragbaren Datenträgers (1) nebeneinander angeordnet sind.

6. Tragbarer Datenträger nach Anspruch 4, **dadurch gekennzeichnet, daß** die zwei elektrisch leitenden Flächen auf gegenüberliegenden Seiten des tragbaren Datenträgers (1) angeordnet sind.

7. Tragbarer Datenträger nach einem der vorhergehenden Ansprüche, **dadurch gekennzeichnet, dass** er als eine Chipkarte ausgebildet ist.

8. Verfahren zum Betreiben eines tragbaren Datenträgers (1) mit einem Schwingkreis (29, 30, 31) zur kontaktlosen Kommunikation und/oder Energieübertragung, **dadurch gekennzeichnet, dass** der Schwingkreis (29, 30, 31) von außen so beeinflusst wird, dass er eine Resonanzfrequenz ($f_{res}$) innerhalb eines ersten Frequenzbereichs aufweist, wenn die kontaktlose Kommunikation zugelassen werden soll und eine Resonanzfrequenz ($f_{res}$) innerhalb eines zweiten Frequenzbereichs aufweist, wenn die kontaktlose Kommunikation unterbunden werden soll und dass bei einer Frequenz innerhalb des zweiten Frequenzbereichs keine kontaktlose Kommunikation, jedoch eine kontaktlose Energieübertragung durchgeführt wird, die für einen Betrieb des tragbaren Datenträgers (1) ausreicht.

9. Verfahren nach Anspruch 8, **dadurch gekennzeichnet, dass** eine durch die Beeinflussung des Schwingkreises (29, 30, 31) von außen verursachte Änderung der Resonanzfrequenz ($f_{res}$) so lange erhalten bleibt, wie die Beeinflussung des Schwingkreises (29, 30, 31) anhält.

10. Verfahren nach einem der Ansprüche 8 oder 9, **dadurch gekennzeichnet, dass** der Schwingkreis (29, 30, 31) ohne äußere Beeinflussung eine Resonanzfrequenz ($f_{res}$) innerhalb des zweiten Frequenzbereichs aufweist.

11. Verfahren nach Anspruch 8, **dadurch gekennzeichnet, dass** eine durch die Beeinflussung des Schwingkreises (29, 30, 31) von außen verursachte Änderung der Resonanzfrequenz ($f_{res}$) bis zu einer weiteren Beeinflussung des Schwingkreises (29, 30, 31) von außen erhalten bleibt.

12. Verfahren nach einem der Ansprüche 8 bis 11, **dadurch gekennzeichnet, dass** durch die Beeinflussung von außen die Kapazität des Schwingkreises (29, 30, 31) geändert wird.

13. Verfahren nach einem der Ansprüche 8 bis 12, **dadurch gekennzeichnet, dass** die Beeinflussung von außen durch eine Hautberührung eines Benutzers erfolgt.

14. Verfahren nach einem der Ansprüche 8 bis 13, **dadurch gekennzeichnet, dass** die kontaktlose Kommunikation und/oder Energieübertragung bei einer Frequenz innerhalb des ersten Frequenzbereichs durchgeführt wird.

15. Verfahren nach einem der Ansprüche 8 bis 14, **dadurch gekennzeichnet, dass** durch die Beeinflussung des Schwingkreises (29, 30, 31) von außen eine Überführung einer elektronischen Schaltung (13) des tragbaren Datenträgers (1) in einen definierten Zustand veranlasst wird.

**Claims**

1. Portable data carrier with an electronic circuit (13) for storing and/or processing data and an oscillating circuit (29, 30, 31) for contactless communication and/or energy transmission, **characterized in that** a control device (30, 31), which is influenceable from the outside, is provided for changing the resonant frequency ($f_{res}$) of the oscillating circuit (29, 30, 31) between a first frequency range and a second frequency range and
that the control device (30, 31) has an operation element (32), upon touching which the resonant frequency ($f_{res}$) of the oscillating circuit (29, 30, 31) is changed;
wherein the operation element (32) is arranged in the surface of the portable data carrier (1); and
the operation element (32) forms part of at least one capacitor.

2. Portable data carrier according to claim 1, **characterized in that** the capacitance of the oscillating circuit (29, 30, 31) can be changed by means of the control device (30, 31).

3. The portable data carrier according to one of the preceding claims, **characterized in that** the control device (30, 31) forms part of the oscillating circuit (29, 30, 31) at least temporarily.

4. The portable data carrier according to claim 1, **characterized in that** the operation element (32) has two electrically conductive surfaces.

5. The portable data carrier according to claim 4, **characterized in that** the two electrically conductive surfaces are arranged side by side on the same side of the portable data carrier (1).

**6.** The portable data carrier according to claim 4, **characterized in that** the two electrically conductive surfaces are arranged on opposite sides of the portable data carrier (1).

**7.** The portable data carrier according to one of the preceding claims, **characterized in that** it is designed as a chip card.

**8.** A method for operating a portable data carrier (1) with an oscillating circuit (29, 30, 31) for contactless communication and/or energy transmission, **characterized in that** the oscillating circuit (29, 30, 31) is influenced from the outside in such a manner that it has a resonant frequency ($f_{res}$) within a first frequency range when the contactless communication is to be permitted, and has a resonant frequency ($f_{res}$) within a second frequency range when the contactless communication is to be denied, and that at a frequency within the second frequency range no contactless communication, but a contactless energy transmission is carried out, which is sufficient for operating the portable data carrier (1).

**9.** The method according to claim 8, **characterized in that** a change of the resonant frequency ($f_{res}$) triggered by influencing the oscillating circuit (29, 30, 31) from the outside is sustained for such a time as the influence on the oscillating circuit (29, 30, 31) persists.

**10.** The method according to one of claims 8 or 9, **characterized in that,** uninfluenced from the outside, the oscillating circuit (29, 30, 31) has a resonant frequency ($f_{res}$) within the second frequency range.

**11.** The method according to claim 8, **characterized in that** a change of the resonant frequency ($f_{res}$) triggered by influencing the oscillating circuit (29, 30, 31) from the outside is sustained until a further influence is exerted on the oscillating circuit (29, 30, 31) from the outside.

**12.** The method according to one of claims 8 to 11, **characterized in that** the capacitance of the oscillating circuit (29, 30, 31) is changed by the influence from the outside.

**13.** The method according to one of the claims 8 to 12, **characterized in that** the influence from the outside is effected by a skin contact by a user.

**14.** The method according to one of claims 8 to 13, **characterized in that** the contactless communication and/or energy transmission is carried out at a frequency within the first frequency range.

**15.** The method according to one of claims 8 to 14, **char-**

**acterized in that** by influencing the oscillating circuit (29, 30, 31) from the outside, a transition of an electronic circuit (13) of the portable data carrier (1) into a defined state is triggered.

**Revendications**

**1.** Support de données portable comprenant un circuit électronique (13) pour la mise en mémoire et /ou le traitement de données et un circuit oscillant (29, 30, 31) pour la communication sans contact et/ou le transfert d'énergie sans contact, **caractérisé en ce qu'**un dispositif de réglage (30, 31) influençable de l'extérieur et destiné à modifier la fréquence de résonance ($f_{res}$) du circuit oscillant (29, 30, 31) entre une première gamme de fréquence et une deuxième gamme de fréquence est prévu et
**en ce que** le dispositif de réglage (30, 31) comporte un élément d'actionnement (32) réagissant au toucher par une modification de la fréquence de résonance ($f_{res}$) du circuit oscillant (29, 30, 31) ;
l'élément d'actionnement (32) étant disposé dans la surface du support de données portable (1) ; et
l'élément d'actionnement (32) étant un composant d'au moins un condensateur.

**2.** Support de données portable selon la revendication 1, **caractérisé en ce que** le dispositif de réglage (30, 31) permet de modifier la capacité du circuit oscillant (29, 30, 31).

**3.** Support de données portable selon une des revendications précédentes, **caractérisé en ce que** le dispositif de réglage (30, 31) est au moins temporairement un composant du circuit oscillant (29, 30, 31).

**4.** Support de données portable selon la revendication 1, **caractérisé en ce que** l'élément d'actionnement (32) comporte deux surfaces électroconductrices.

**5.** Support de données portable selon la revendication 4, **caractérisé en ce que** les deux surfaces électroconductrices sont disposées côte à côte du même côté du support de données portable (1).

**6.** Support de données portable selon la revendication 4, **caractérisé en ce que** les deux surfaces électroconductrices sont disposées sur des côtés opposés du support de données portable (1).

**7.** Support de données portable selon une des revendications précédentes, **caractérisé en ce qu'**il est réalisé sous forme d'une carte à puce.

**8.** Procédé de fonctionnement d'un support de données portable (1) comprenant un circuit oscillant (29, 30, 31) pour la communication sans contact et/ou le transfert d'énergie sans contact, **caractérisé en ce que** le circuit oscillant (29, 30, 31) est influencé à partir de l'extérieur de telle manière qu'il présente une fréquence de résonance ($f_{res}$) étant comprise dans une première gamme de fréquence quand la communication sans contact doit être permise, et présente une fréquence de résonance ($f_{res}$) étant comprise dans une deuxième gamme de fréquence quand la communication sans contact doit être empêchée, et **en ce que**, quand une fréquence est comprise dans la deuxième gamme de fréquence, une communication sans contact n'est pas effectuée, mais un transfert d'énergie sans contact suffisant pour un fonctionnement du support de données portable (1) est cependant effectué.

9. Procédé selon la revendication 8, **caractérisé en ce qu'**une modification de la fréquence de résonance ($f_{res}$) causée par l'influence exercée sur le circuit oscillant (29, 30, 31) à partir de l'extérieur se maintient tant que l'influence exercée sur le circuit oscillant (29, 30, 31) persiste.

10. Procédé selon une des revendications 8 ou 9, **caractérisé en ce que** le circuit oscillant (29, 30, 31) présente une fréquence de résonance ($f_{res}$) comprise dans la deuxième gamme de fréquence quand aucune influence n'exercée à partir de l'extérieur.

11. Procédé selon la revendication 8, **caractérisé en ce qu'**une modification de la fréquence de résonance ($f_{res}$) causée par l'influence exercée sur le circuit oscillant (29, 30, 31) à partir de l'extérieur se maintient jusqu'à ce qu'une autre influence soit exercée à partir de l'extérieur sur le circuit oscillant (29, 30, 31).

12. Procédé selon une des revendications de 8 à 11, **caractérisé en ce que** la capacité du circuit oscillant (29, 30, 31) peut être modifiée par l'influence exercée à partir de l'extérieur.

13. Procédé selon une des revendications de 8 à 12, **caractérisé en ce que** l'influence exercée à partir de l'extérieur s'opère par un contact avec la peau d'un utilisateur.

14. Procédé selon une des revendications de 8 à 13, **caractérisé en ce que** la communication sans contact et/ou le transfert d'énergie sans contact est effectué(e) à une fréquence comprise dans la première gamme de fréquence.

15. Procédé selon une des revendications de 8 à 14, **caractérisé en ce que,** par l'influence exercée sur le circuit oscillant (29, 30, 31) à partir de l'extérieur, un circuit électronique (13) du support de données portable (1) est porté à un état défini.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19817566 A1
- US 20010043141 A1
- EP 1056040 A1
- US 20030132301 A1
- DE 19817566